Europäisches Patentamt

European Patent Office

Office européen des brevets

(19)

(11) Publication number: **0 252 209**
A2

(12) **EUROPEAN PATENT APPLICATION**

(21) Application number: **87102489.9**

(22) Date of filing: **21.02.87**

(51) Int. Cl.³: **G 01 S 17/36**

(30) Priority: **07.07.86 US 883289**

(43) Date of publication of application:
**13.01.88 Bulletin 88/2**

(84) Designated Contracting States:
**DE FR GB IT NL**

(71) Applicant: HONEYWELL INC.
Honeywell Plaza
Minneapolis Minnesota 55440(US)

(72) Inventor: Stauffer, Normal L.
7177 South Ulster Street
Englewood Colorado 80112(US)

(74) Representative: Herzbach, Dieter et al,
Honeywell Europe S.A. Holding KG Patent- und
Lizenzabteilung Kaiserleistrasse 55 Postfach 184
D-6050 Offenbach am Main(DE)

(54) Proximity or distance sensing apparatus.

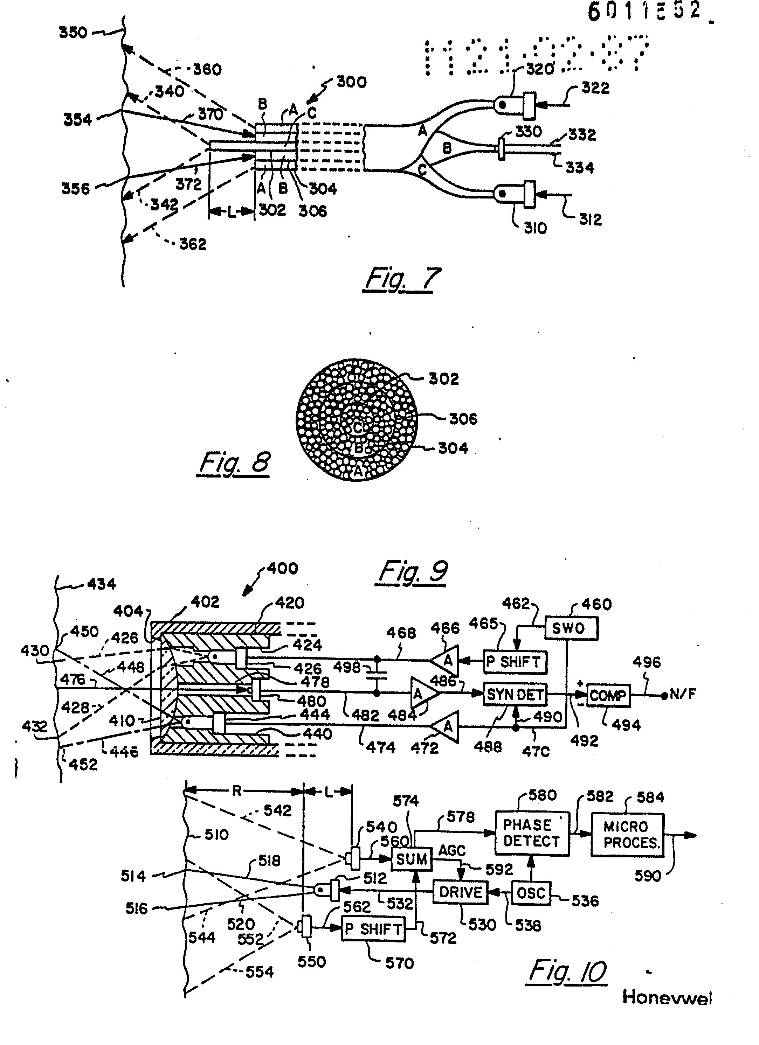

(57) A device for measuring the distance to a surface (514)
comprising first and second energy detecting means (540,
550) positioned at two different distances (R, R+L) with re-
spect to the surface and energy transmitting means (512) for
illuminating said surface with radiation of a first frequency.
Phase shift means (570) are connected to one of said detect-
ing means (550) and signal processing means (574, 580, 584)
are connected to receive the phase-shifted and the non-
shifted signal of the detecting means to produce a resultant
output which varies with the ratio therebetween as an indication of the distance to the remote surface (Figure 10).

Fig. 10

Honevwel

HONEYWELL INC.

Honeywell Plaza

Minneapolis, MN 55440 USA

0252209

February 18, 1987

M6011552 EP

Hz/ep

## Proximity or Distance Sensing Apparatus

The present invention relates to an apparatus according to the preamble of the independent claims, as described and shown in the prior European application EP-A 0 213 544.

It is often desirable to be able to determine the distance to a surface or object without actually touching the surface or object itself. In the field of process controls, for example, it may be desirable to determine the placement of machine parts, materials, sheets, or irregularly shaped objects without using tape measures, rules, or other normal contact like devices. In the field of photography it is desirable to be able to automatically focus the camera on objects at a remote distance from the camera.

Many optical devices have been devised in the prior art for determining the distance to such remote objects, most of which have been based upon the principle of triangulation wherein light reflected from the object travels over two separate paths so as to be received upon spaced apart detectors and the images they produce compared to determine the distance to the remote object. In other devices a beam of energy is transmitted to the object and the return energy is either measured for the angle in which the reflection occurred or the time elapsed from the sending to receiving of the energy. Prior application (M6011198 EP) EP-A 0 183 240

discloses a surface position sensor in which a beam of energy is reflected from a surface and passed through an aperture so as to be received along the length of the detector at a position corresponding to the surface position. Other examples of surface position sensors and similar apparatus in the prior art may be seen in US-A 2,651,771, 4,065,778, 4,479,706 and 4,473,285.

One major difficulty with triangulation type systems is that they must have very tight mechanical tolerances which makes them more costly to build and require more care in handling and use than may be desired. The systems which time a beam from transmission to reception are very costly, extremely complex and usually quite large. Ultrasonic types have the additional problem of being subject to interference in factory conditions and being quite bulky.

It is therefore the object of the present invention to provide a compact, simple, accurate, and inexpensive distance sensing apparatus without utilizing the triangulation or timing techniques of the prior art. This object is achieved according to the characterizing features of the independent claims. Further advantageous embodiments of the inventive apparatus may be taken from the subclaims.

In the present invention, two energy producing means are positioned to be at different distances from the remote surface to be ranged. The energy producing means may radiate beams of infrared or visible energy modulated at the same frequency but with one of the beams phase shifted with respect to the other. The energy from the two energy producing means illuminates a portion of the remote surface and some of the energy is reflected. A means responsive to the energy is positioned to receive the reflection of both beams from the surface so as to produce an output which is, in effect, the vector sum of the two reflections. Rather than measure the magnitude of the resultant vector, which depends on the surface reflectivity that may not be known or may vary, it was discovered that the phase angle of the vector sum reflected is related to the range and is not dependent on surface reflectivity. Accordingly by detecting this phase angle the present invention is able to produce an output indicative of the desired range.

Preferably the energy producing means and energy responsive means consist of radiation transmitting means and detector means connected to fiber optic elements ending in different planes or having different numerical apertures.

A preferred embodiment uses one radiation transmitting means and two detector means.

Under reference to the figures of the attached drawing, the inventive apparatus shall be further described, where

FIGURE 1 shows a schematic diagram of a sensing apparatus;

FIGURE 2 shows a vector diagram of the fluxes produced by the energy sources of FIGURE 1;

FIGURE 3 is a graph showing the variation of phase angle of the resultant energy in degrees with the surface distance in millimeters;

FIGURE 4 is a schematic diagram of an alternate sensing apparatus;

FIGURE 5 is a vector diagram of the fluxes produced by the energy sources of FIGURE 4;

FIGURE 6 shows a device for correcting a problem that may arise with highly specular surfaces;

FIGURE 7 shows an alternate embodiment for the transmitting and receiving elements in the form of a fiber optic probe;

FIGURE 8 is an enlarged cross-section view of the probe of FIGURE 7;

FIGURE 9 is an embodiment of the invention for use as a switching proximity sensor; and

FIGURE 10 is a schematic diagram of another preferred embodiment of the present invention.

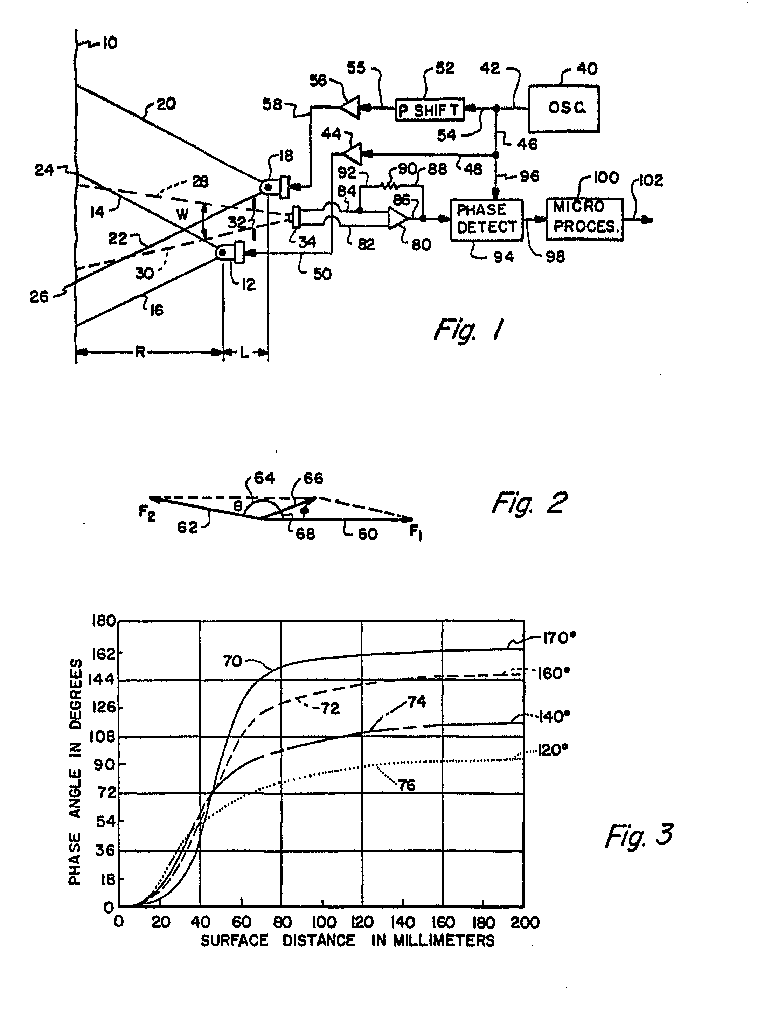

In FIGURE 1, a surface 10 is shown the distance to which is to be measured. Surface 10 is shown as at least partly diffuse so that energy reflected therefrom comes off at various angles.

- 4a -

A first energy projecting device 12 which, in the preferred embodiment, is an infrared emitting LED, is shown located at the unknown distance R from the surface 10 and projects a beam of infrared energy over paths such as shown by lines 14 and 16 to the surface 10. A second energy projecting device 18 which is also, in the preferred embodiment, an infrared emitting LED, is shown located more remote from surface 10 than LED 12 by a predetermined distance L. LED 18 is shown above and behind LED 12 so as to send a second beam of infrared energy along paths such as shown by lines 20 and 22 to the surface 10. The beams of energy from LEDs 12 and 18 are shown to overlap on the surface 10 in the area between points 24 and 26 which, of course, also extends into and out of the plane of FIGURE 1. Energy from this area is reflected off the surface 10 along paths such as shown by dashed lines 28 and 30 through an aperture shown by reference numeral 32 to an energy responsive detector 34 which, in the preferred embodiment, is a photo diode preferably a silicon photo detector which is responsive to infrared energy.

An oscillator 40 is shown in FIGURE 1 operable to produce an output on a line 42 which is of predetermined frequency and which is in turn presented to a driver amplifier 44 through lines 46 and 48. The output of amplifier 44 is presented over a line 50 to drive LED 12 at a first frequency and phase. The signal on line 42 is also presented to a phase shifter 52 via line 54 so that the signal from oscillator 40 is shifted by a predetermined amount. This phase shifted signal is present via line 55 to a second driver amplifier 56 which in turn presents the phase shifted signal along a line 58 to drive LED 18 at the first frequency but at a second phase. Thus, it is seen that LED 12 and LED 18 are both driven at the frequency of oscillator 40, but the phase of the energy produced by LED 18 is shifted with respect to the phase of the energy produced by LED 12. It should be understood that the amount of phase shift is not particularly critical to the present invention (although, with larger phase shifts, i.e. 120 degrees to 180 degrees, the sensitivity to range changes tends to increase), nor is the frequency of oscillator 40 or the distance L, these values being chosen by those skilled in the art for best performance. In one experiment, the frequency was chosen to be 10 KHz, L was 40 mm and the phase shift was a large angle between 120 degrees and 180 degrees.

The reflected energy from the area between points 24 and 26 and detected by detector 34 will be a vector summation of the fluxes produced by the LEDs 12 and 18. More particularly, if $I_1$ is the radiant intensity of LED 12, then the flux density $E_1$ from LED 12 is:

$$E_1 = \frac{I_1}{R^2} \qquad (1)$$

-7-

Similarly, if $I_2$ is the radiant intensity of LED 18, then the flux density $E_2$ form LED 18 becomes:

$$E_2 = \frac{I_2}{(R + L)^2} \qquad (2)$$

If detector 34 has an area Q and if the aperture 32 is such that the detector subtends an angle W, then the flux $F_1$ received by the detector from LED 12 is:

$$F_1 = E_1 \times \frac{KWQ}{\pi} \qquad (3)$$

Where K is the fraction of radiation reflected from the surface 10.

Substituting equation 1:

$$F_1 = \frac{I_1}{R^2} \times \frac{KWQ}{\pi} \qquad (4)$$

Likewise, the flux $F_2$ received by detector 34 from LED 18 is:

$$F_2 = E_2 \times \frac{KWQ}{\pi} \qquad (5)$$

Substituting equation 2:

$$F_2 = \frac{I_2}{(R + L)^2} \times \frac{KWQ}{\pi} \qquad (6)$$

-8-

It is seen from equations 4 and 6 that the flux received by the detector is related to the distance, R, to the remote surface and if the factor K were constant, the measurement of $F_1$ or $F_2$ would produce an indication of the unknown distance R. K is, however, dependent upon the quality of the surface 10 and is not constant. Accordingly, measurement of the fluxes $F_1$ and $F_2$ will only be acceptable if K can be made to drop out. For example, if the ratio of $F_1$ and $F_2$ is taken, K and also WQ and $\pi$ drop out by the cancellation effects of division. Accordingly, I can obtain an output indicative of the distance R by measuring a ratio of $F_1$ and $F_2$. In a prefered emdodiment I obtain an expression which involves this ratio by measuring the phase of the signal received by detector 34.

Since the LEDs are modulated by the same frequency but the phase of one is shifted with respect to the other by an amount $\emptyset$ which, as described above in a preferred embodiment is a fairly large angle , then the total flux received by detector 34 is the vector sum of $F_1$ and $F_2$ as is shown, for example, in FIGURE 2 of the drawings. In FIGURE 2, the flux received by detector 34 from LED 12 is shown as an arrow 60 extending to the right and labelled $F_1$. The flux received by detector 34 from LED 18 is shown in FIGURE 2 as an arrow 62 extending to the left at a large angle θ labelled 64 about 170 degrees from arrow 60 and labelled $F_2$.

The resultant vector is shown by an arrow 66 in FIGURE 2 and this lies at an angle 68 labelled ∅ in FIGURE 2. This resultant vector 66 will be the magnitude and phase of the signal produced by detector 34 when it is set to view the area between points 24 and 26 on surface 10 and, as will be explained, measurement of angle ∅ produces an indication of the distance R as desired. More particularly, from FIGURE 2 it can be shown that the tangent of phase angle ∅ for the resultant flux vector 66 is:

$$\frac{\text{Sin } \theta}{\dfrac{F_1}{F_2} + \text{Cos } \theta} \quad (7)$$

and because the denominator involves the ratio $\dfrac{F_1}{F_2}$, the undesirable variable K as well as the constants W, Q and π drop out. By substitution of equations 4 and 6 into equation 7, the phase angle ∅ can be expressed as:

$$\emptyset = \tan^{-1} \left[ \frac{\text{Sin } \theta}{\dfrac{I_1}{I_2} \times \dfrac{(R + L)^2}{R^2} + \text{Cos } \theta} \right] \quad (8)$$

It is seen from equation 8 that the factors KWQ and have all dropped out leaving the phase angle

$\emptyset$ related only to the ratio of the radiant intensities of the LEDs, the sin and cosin of the known phase shift, the known distance L, and the unknown distance R. Thus, $\emptyset$ will vary with R in a somewhat non-linear fashion as is best seen in FIGURE 3.

Of course, other ways of dividing or ratioing the fluxes $F_1$ and $F_2$ to eliminate the factors K, W, Q, and $\overline{\pi}$ will occur to those skilled in the art. For example, while I have shown both LEDs 12 and 18 operating simultaneously, they can be operated by switches in series so that the surface 10 is first illuminated by LED 12 and then by LED 18. In this event, the output of detector 34 could be presented to a sample-and-hold circuit (not shown) which would hold one signal until it received the next and then compare them in a manner similar to that described. The vector resultant would not appear at any one time at the output of the detector 34 but would be derived by downstream apparatus which would take the ratio of the series signals from the detector.

In FIGURE 3, a graph showing different phase angles for the resultant vector 66 of FIGURE 2 compared with the distance R to the surface 10 with various amounts of phase shift is depicted. In Figure 3, $\frac{I_1}{I_2}$ is 0.3 and L is 40 millimeters. The solid line shown by reference numeral 70 represents the curve when the phase shift is 170 degrees. The dashed line 72 shows the variation when the phase shift is 160 degrees, the solid-dash line 74 shows the variation when the phase shift is 140 degrees, and dotted line 76 shows the variation when the phase shift is 120 degrees. The preferred embodiment uses a large phase shift since the curve, at the upper end of the measurement, has the greatest variation. Other factors involved, however, are the distance L and the radiant intensities of LEDs 12 and 18. Accordingly, it will be best to choose the desired values in accordance with the desired output for a particular use.

While FIGURE 3 shows variations only between 0 and 200 millimeters for the distance R, it should be understood that the variation can be extended much

-11-

further and surfaces up to a number of yards from the detectors can be measured with a fair degree of accuracy. Furthermore, when used for camera autofocus, it has been found that a curve such as solid line 70 fairly closely approximates the curve that is found when lens motion is plotted against distance to remote object. In other words, the lens moves in the camera by a non-linear amount which, at the larger distances approaches a flat curve since camera focus beyond several yards is substantially at infinity. Because of this approximation, by properly choosing the phase shift, a direct drive between the distance measuring circuit as shown in FIGURE 1 and the camera lens can be produced. It would not then be necessary to provide any characterized means to adjust the amount of camera lens motion for changes in distance since the output of the device of FIGURE 1 would approximate this without characterization.

I have also found that if the phase shift is made 180 degrees, then the curve of FIGURE 3 approaches a verticle line at a surface distance which depends upon the ratio $\frac{I_1}{I_2}$ and L. This feature would find use in rapidly indicating whether a surface were closer or further than a predetermined amount or, for example, on automobiles, to sound an alarm when an object was closer than a preset minimum. Such a circuit will be described in connection with FIGURE 9.

-12-

Returning to FIGURE 1, the output of detector 34 which is indicative of the resultant flux vector 66 of FIGURE 2, is presented to an amplifier 80 by two conductors 82 and 84. The output of amplifier 80 is connected to the negative input thereof by conductor 86, a conductor 88, a resistor 90, and a conductor 92 for a feedback loop such as is commonly used for an operational amplifier. Conductor 86 is also connected to a phase detector 94 which receives a reference input from oscillator 40 via conductors 42, 46, and a conductor 96. Phase detector 94 operates to determine the phase angle $\emptyset$ of FIGURE 2 in order to produce an output representative of the function of equation 8 above. This output is seen on a conductor 98 which is presented to a microprocessor 100 for purposes of solving equation 8 and producing an output on a conductor 102 representative of the unknown distance R as desired. Of course, where the apparatus is driving a camera lens, the microprocessor 100 may not be necessary since, as explained above, the output from the phase detector following the non-linear curve for example 70 in FIGURE 3 may be sufficient to directly drive the camera lens. Many autofocus circuits already employ a microprocessor, however, and the output from phase detector 94 can therefore readily be used with that microprocessor to produce the autofocus signal.

Likewise, when the phase shift is 180 degrees, the output from phase detector 94 will be abrupt and a micro processor would not be required. In industrial process applications, the output 102 may be used to control the position of a robot arm or other device necessary to perform a desired function on the surface 10 or just to make sure it is within the proper range of distances for assembly line work.

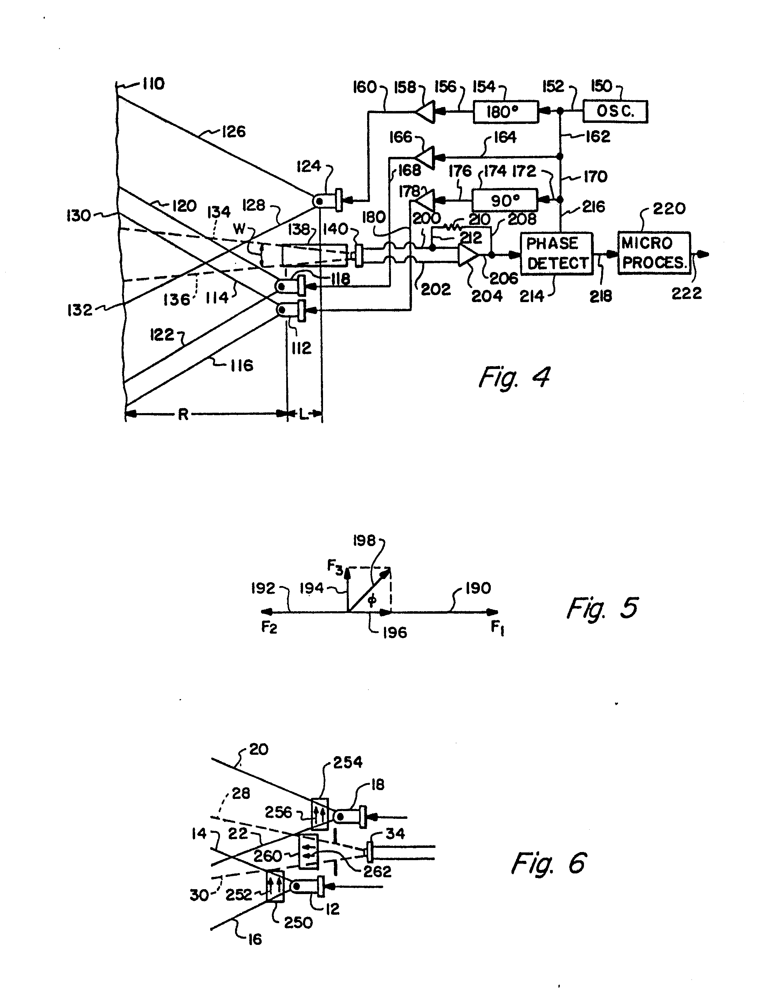

In the above-described apparatus, it is seen that a very accurate measurement of the distance to a remote surface can be made with inexpensive and easily available components connected in a simple and straight forward manner without need for close mechanical tolerances and which will not be bulky or costly. These desirable effects are produced by the measuring of the phase angle of the resultant flux vector. It snould be understood that other techniques to take the ratio of $F_1$ and $F_2$ or other ways to produce a resultant flux vector may be devised by those skilled in the art, as for example, the schematic diagram of an alternate embodiment shown in FIGURE 4.

In FIGURE 4, a diffuse surface 110 is shown to which the unknown distance R is to be measured. A first source of energy 112 which, like in FIGURE 1, may be an infrared LED is shown projecting a beam of energy along paths such as 114 and 116 to the surface 110. A second energy source 118 is shown sending its beam along paths such as 120 and 122 to the surface 110. A third energy source 124, which may also be an infrared LED is shown sending its beam along paths such as 126 and 128 to the surface 110. As seen in FIGURE 3, LEDs 112 and 118 are located the unknown distance R from surface 10 whereas the third LED 124 is located more remotely than the other two LEDs by a known distance L. As with FIGURE 1, the three LEDs project their energy onto the wall in such a way that there is an area between points 130 and 132 that overlap.

Energy from surface 110 is reflected back along paths such as shown by dashed lines 134 and 136 through an aperture shown as a tubular member 138 to a detector 140 sensitive to the radiation emitted by the LEDs. As with FIGURE 1, detector 140 may be a photo diode such as a silicon photo detector sensitive to infrared energy. As with FIGURE 1, tubular member 138 acting as an aperture restricts the reflected energy to a solid angle W and detector 140 will have a detection area Q.

An oscillator 150 in FIGURE 3 produces a signal of predetermined frequency on a line 152 which is presented first to a 180 degree phase shifter 154 whose output on line 156 is presented to a driver amplifier 158 so as to produce a driving signal on line 160 to the LED 124 at the fixed frequency but at a phase shifted 180 degrees with respect to the output of oscillator 150. The output of oscillator 150 on line 152 is also presented by way of a line 162 and a line 164 to a second driver amplifier 166 whose output is connected by way of a line 168 to the input of LED 118. Accordingly, LED 118 is driven by a signal which is at the same frequency and phase as the output of oscillator 150. A third path for the output of oscillator 150 is via line 152, line 162, a line 170, and a line 172 to a second phase shifting device 174 which shifts the phase of the signal from oscillator 150 by 90 degrees. The output of phase shifter 174 on a line 176 is present to a third driver amplifier 178 whose output on a line 180 drives LED 112. The input to LED 112 is therefore of the same frequency as the oscillator 150 but with a phase which has been shifted 90 degrees with respect thereto.

The area between points 130 and 132 on surface 110 which receive beams from all three LEDs, as was the case in FIGURE 1, reflects energy, the vector sum of which is detected by detector 140. If the signal from LED 118 which is in phase with the oscillator output 150 is $F_1$, this vector is shown in FIGURE 5 as an arrow 190 extending to the right. The signal from LED 124 which is 180 degrees out of phase

-16-

with the oscillator 150 is the signal $F_2$ seen in FIGURE 5 as an arrow 192 extending to the left and 180 degrees out of phase with the arrow 190. The flux from LED 112, $F^3$, is shown in FIGURE 5 as an arrow 194 extending upwardly and 90 degrees out of phase with respect to arrow 190. In FIGURE 5, the difference between flux $F_1$ and $F_2$ is shown as an arrow 196 extending to the right in phase with the arrow 190. The resultant vector shown as arrow 198 is the diagonal constructed between arrow 196 and 194 and represents the resultant flux from the three sources of energy, LEDs 112, 118, and 124.

The phase angle $\emptyset$ between the resultant vector 198 and flux vector 190 is measured and, as will be shown, is representative of the distance R. More particularly, with the solid angle W subtended by the detector 140 having an area Q and with the intensity of radiation $I_1$ from LED 118, the flux density $E_1$ therefrom is given by the equation:

$$E_1 = \frac{I_1}{R^2} \tag{9}$$

Similarly, with $I_2$ the radiant intensity of LED 124, then the flux density $E_2$ therefrom is given by the equation:

-17-

$$E_2 = \frac{I_2}{(R + L)^2} \qquad (10)$$

Likewise, with $I_3$ the radiant intensity of LED 112, then the flux density $E_3$ therefrom is given by the equation:

$$E_3 = \frac{I_3}{R^2} \qquad (11)$$

As with the analysis of FIGURE 1, the reflected flux from the output of LED 118 will be given by the equation:

$$F_1 = E_1 \times \frac{KWQ}{\pi} = \frac{I_1}{R^2} \times \frac{KWQ}{\pi} \qquad (12)$$

Similarly, the flux reflected from surface 10 that originated at LED 124 will be given by the equation:

$$F_2 = E_2 \times \frac{KWQ}{\pi} = \frac{I_2}{(R + L)^2} \times \frac{KWQ}{\pi} \qquad (13)$$

and the flux reflected from surface 110 originating at LED 112 will be given by:

$$F_3 = E_2 \times \frac{KWQ}{\pi} = \frac{I_3}{R^2} \times \frac{KWQ}{\pi} \qquad (14)$$

From FIGURE 5, the resultant flux given by arrow 198 can be shown to be given by the equation:

-18-

$$\emptyset = \tan^{-1}\left[\cfrac{\cfrac{I_3}{R^2}}{\cfrac{I_1}{R^2} - \cfrac{I_2}{(R + L)^2}}\right] \qquad (15)$$

It is thus seen again that $\emptyset$ will be related to R since K, W, Q and $\pi$ have cancelled out and R is tne only variable in the equation through a non-linear relationship similar to that seen in FIGURE 3.

Returning again to FIGURE 4, the resultant flux received by detector 140 produces an output signal on lines 200 and 202 to an amplifier 204 having an output on line 206. The output 206 is connected by a line 208, a resistor 210 and a line 212 back to the negative input of amplifier 204 for a feedback circuit characteristic of operational amplifiers. The output line 206 is also connected to a phase detector 214 which has a reference signal from oscillator 150 presented thereto via lines 152, 162, 170, and a line 216. Pnase detector 214 produces an output which is related to the angle $\emptyset$ and thus to the unknown distance R which appears on output line 218 presented to a microprocessor 220 which produces an output to any suitable utilization apparatus on a line 222. As mentioned before, it is possible to simulate the general curve structure for the camera lens motion with respect to distance and thus with camera autofocus system, microprocessor 220 may not be necessary. Since

-19-

many cameras already have a microprocessor, however, it may be desirable to utilize the output from the phase detector through the microprocessor to position the camera lens.

When the surface such as 10 or 110 is highly specular, the return signal will appear to have originated from a source which is twice the distance from the detector as the surface 10 or 110 is. With respect to the specularly reflected energy the phase of the resultant vector would be given by the equation:

$$\emptyset = \tan^{-1} \left[ \frac{\text{Sin } \theta}{\dfrac{I_1}{I_2} \times \dfrac{(2R + L)^2}{4R^2} + \text{Cos } \theta} \right] \quad (16)$$

and the system would work perfectly well on specular surfaces with this new equation. Where, however, the surface to be measured is a mixture of specular and diffuse then some arrangement for removing the specular reflection may be desirable. FIGURE 6 shows the detectors of FIGURE 1 with a correction apparatus for removing the specular part of a mixed signal. In FIGURE 6, the LED 12 is shown presenting its beam along paths such as lines 14 and 16 through a polarizer 250 which polarizes the energy from LED 12 in a first direction shown by arrows 252. In similar fashion, the energy from LED 18 presents its beam along paths such as lines 20 and 22 through a second polarizer 254, her polarized in the same direction as polarizer 250 as shown by arrows 256 or 180 degrees oposite.

The detector 34 receiving reflected energy along paths such as shown by dashed line 28 and 30 receives them through an analyzer 260 which is polarized 90 degrees with respect to the directions of polarization of polarizers 250 and 254 as shown by arrows 262. The effect of analyzer 262 then is to remove the polarized light that is coming from LEDs 12 and 18, as would be the case with a specular surface, but not to remove the diffuse light coming off of the surface, which is not polarized. Accordingly, the reception by the detector 34, although perhaps of lesser magnitude than was the case in connection with FIGURE 1, will still be only that portion of the signal which is diffuse in nature and accordingly will be analyzed by the system of FIGURE 1 in the same manner as previously described.

The present invention also can be utilized to improve the operation of apparatus presently available in the prior art. For example, a fiber optic sensor manufactured by Mechanical Technology Incorporated and identified as the MTI 1000 transmits light through a fiber optic probe to a target surface and light reflected from the target back through the probe is converted into an electrical signal proportional to the distance between the probe face and the target by measuring the amount of flux returned from the surface. Less flux indicates larger distances while larger flux indicates smaller distances. The difficulty with the unit is that it must be calibrated for each surface that it encounters. The present invention is not so sensitive to the quality of the surface and need not be calibrated with each new surface it encounters. Accordingly, in FIGURES 7 and 8 a fiber optic probe 300 for use in applications like the MTI 1000 is shown. Probe 300 comprises three concentric layers of fiber optic elements with the center layer 302 and an outer layer 304 operating as radiation emitters and the middle layer 306 operating as the detector. The radiation emitting layers 302 and 304 should have a relatively high numerical aperature (NA) so that energy is transmitted to the surface in a relatively wide beam thus allowing both emitting elements to illuminate a predetermined area on the remote surface. The energy receiving layer 306 should have a relatively low NA so that energy is received in a more narrow beam from that predetermined area of the surface. The inner layer or core 302 is labelled "C" and is surrounded by a concentric middle layer 306 which is labelled "B" and which, in turn, is surrounded by the concentric outer layer 304 which is labelled "A". The three layers each comprise a bundle of small individual fiber optic elements to form a cylindrical probe. As seen in FIGURE 7, the inner or core layer 302, labelled C, is bundled at the right end so as to receive energy from a first light emitting diode 310 which is energized from an input shown by arrow 312 to produce radiation, visible or preferably infrared, throughout the bundle of fiber elements in inner or core layer 302. In similar fashion the outer layer 304, labelled A, is bundled at the right end so as to receive energy from a second light emitting diode 320 which is energized from an input shown by arrow 322 to produce radiation along the outer layer of fiber optic elements 304. The middle layer 306, labelled B, is shown bundled at the right end to be adjacent to a radiation detector 330 which receives radiation from middle layer 306 to produce an output on lines 332 and 334 for use by the electronics such as is shown in connection with FIGURE 1. It is noted that the inner layer 302 extends beyond the outer layer 304 by a distance L in FIGURE 7 which corresponds to the distance L described in connection with FIGURE 1 so that the same operation as was explained in connection with FIGURE 1 takes place. More particularly, LED 310 and LED 320 will transmit light at the same frequency but phase shifted preferably by a rather large angle so that the light emitted from the inner layer 302 traveling along lines such as shown by dash lines 340 and 342 will illuminate a region of the remote surface 350 between points 354 and 356. Similarly, light from the outer layer 304 traveling lines such as shown by dash lines 360 and 362 will also illuminate the area between points 354 and 356. Light reflected back from this area along lines such as shown as solid lines 370 and 372 will be received by the middle layer 306 and transmitted to the detector 330 as seen in FIGURE 7. The signals on lines 332 and 334 will be processed by circuitry such as that shown in FIGURE 1 to provide an output indicative of the distance to the surface 350. Note that the angle between dashed lines 340 and 342 and the angle between dashed lines 360 and 362 is larger than the angle between solid lines 370 and 372. This is due to the higher NA of layers 302 and 304 than layer 306.

FIGURE 9 shows an embodiment of the present invention for use as a switching proximity sensor for an application where it is desired to know when a surface being examined is at a predetermined distance or when it is either too near or too far. In FIGURE 9 a probe 400 is shown having a casing 402 with an aperture 404 at the left end thereof. A lens 410 is shown mounted at the interior left end of the housing 402. A mounting member 420 is shown within the housing 402 and having a first bore hole 424 through the upper portion thereof and into which a first energy transmitter such as an IR producing LED 426 is mounted. Energy from the LED 426 passes through the remaining portion of the bore hole 424 and thence through the lens 410 and aperture 404 along lines such as shown by dash lines 426 and 428 to illuminate an area between points 430 and 432 on a remote surface 434. A second bore hole 440 located in the lower portion of mounting member 420 has a second energy emitter such as light emitting diode 444 mounted therein. LED 444 transmits energy along paths such as shown as dash-dot lines 446 and 448 to illuminate the surface 434 between points 450 and 452. As with the prior embodiments, the light emitting diodes 426 and 444 are at slightly different distances from the remote surface 434 for the same reasons as explained in connection with the other figures. A square wave oscillator 460 is shown having a first output on a line 462 to a phase shifter 465 which energizes an amplifier 466 to produce a square wave signal on a line 468 to energize the light emitting diode 426. The square wave oscillator 460 also produces an output on a line 470 to energize an amplifier 472 which produces a square wave

output on a line 474 to energize the light emitting diode 444. The phase shifter 465 causes the signal from light emitting diode 426 to be phase shifted with respect to the signal from light emitting diode 444 by, in this case preferably, 180 degrees. Thus the central portion of surface 434 will be illuminated by energy from both diodes 426 and 444 but of opposite phase. The reflected energy will pass along a line such as shown by solid arrow 476 through a central bore hole 478 to a detector 480 which is mounted at the right end of central bore hole 478. Detector 480 will receive the energy from the two light emitting diodes 426 and 444 as reflected from surface 434 and will produce a resultant signal of the first phase or of the 180 degree shifted phase at an output connection 482. This signal is presented to an amplifier 484 whose output on line 486 is connected to a phase detector such as a synchronous detector 488. Phase detector 488 also receives a reference phase signal from the square wave oscillator 460 via lines 470 and a line 490. The output of the phase detector 488 appears on a line 492 and is either 0 showing that the surface is at a desired location or is of a plus characteristic when the resultant signal is of the first phase showing that the surface is closer than the desired position or is of a minus characteristic when the resultant signal is of the 180° shifted phase showing that the surface is more remote than the desired location. This plus, zero, or minus signal is presented to a comparator 494 which produces an output on a line 496 to indicate when the surface is "near" or "far". A small capacitor 498 may be connected between the output of amplifier 466 and the input of amplifier 484 to supply a small signal of the 180° shifted phase to cause a "far" indication when no surface 434 is visible within the range of the device.

FIGURE 10 shows an alternate embodiment of the present invention wherein the system is substantially reversed from that shown by FIGURE 1. More particularly, where FIGURE 1 utilized two radiation emitters and one radiation detector, FIGURE 10 utilizes one radiation emitter and two radiation detectors but, as will be shown, the basic principle involved is substantially the same.

In FIGURE 10 the remote object 510 is shown a distance R away from the system as was the case in connection with FIGURE 1. A radiation source such as an LED 512 is shown illuminating an area between points 514 and 516 of object 10 by radiation being emitted along solid lines 518 and 520. LED is, as before, preferably an infrared radiation emitting diode and is energized from a drive circuit 530 by a connection shown as arrow 532. Drive circuit 530 is connected to an oscillator 536 by means of a connection shown as arrow 538. Drive circuit 530 is operable to change the gain of the signal being supplied to LED 512 and was not utilized in connection with FIGURE 1 since changing the gain of two light emitting diodes could very well have introduced errors by changing the intensity of one of the LEDs more than the other. However, with the use of only one LED, the gain may be changed if that is desired. It should be noted that the angle between lens 518 and 520 is rather small so that the area between points 514 and 516 on surface 510 is smaller than was the case for the emitters of FIGURE 1.

A first radiation responsive detector 540 is shown viewing an area of object 510 over a fairly wide angle shown by dashed lines 542 and 544. The viewing angle is chosen so that it will include the entire area between points 514 and 516 that are illuminated by the LED 512. A second radiation responsive detector 550 is shown viewing an area of object 510 over another fairly large angle shown by dashed lines 552 and 554 so as to include the entire area between points 514 and 516 illuminated by LED 512. Thus, both detectors 540 and 550 receive energy radiated from LED 512 and reflected back from the area between points 514 and 516 on the object 510. It is noted that detector 550 is located a distance L closer to the object 510 than is detector 540 for purposes to be explained hereinafter.

The output of detector 540 is shown by an arrow 560 and the output of detector 550 is shown by an arrow 562. These outputs vary with the amount of radiation received by the detectors 540 and 550 respectively. More particularly, the AC output of detector 540 will vary with the flux $F_1$ received by detector 540 in accordance with the equation:

$$F_1 = \frac{A}{R^2} \left[ \frac{EP\ a\ \sin\ wt}{\pi} \right] \qquad (17)$$

where A is the illuminated area between points 514 and 516, E is the illumination incident upon the object 510, P is the reflectivity of the surface and a is the area of the detector 540. In similar fashion, the AC output at 562 varys with the flux $F_2$ in accordance with the equation:

$$F_2 = \frac{A}{(R+L)^2} \left[ \frac{EP\ a\ \sin\ wt}{\pi} \right] \qquad (18)$$

It will be seen that by taking the ratio $F_1/F_2$ all of the factors except R and L cancel out as is seen by the equation:

$$F_1/F_2 = \frac{(R+L)^2}{R^2} \qquad (19)$$

Of course L is constant so that the ratio of the two fluxes varies in a non-linear fashion with the distance R to the remote object.

The ratio can be obtained in any of a variety of ways, but in FIGURE 10 it is shown by utilizing a phase shifter shown as box 570 connected to receive the output 562 of detector 550. Phase shifter 570 operates to change the phase of the signal on output 562 by a fairly large amount, for example, 170 degrees, and produces a phase shifted output on a connection shown as arrow 572 connected to a summing network shown as box 574. The output 560 from detector 540 is also connected to summing circuit 574 and summing circuit 574 operates to sum the two outputs 560 and 572 to produce a resultant output on a connection shown as arrow 578 connected to a phase detector 580 which, like was the case in connection with FIGURE 1, detects the phase of the summed signal. The phase of this signal will be indicative of the distance to the remote object by the same analysis as was used in connection with FIGURE 1. More particularly, if K is equal to $\frac{\Delta EPa}{\pi}$, then from equation (18):

$$F_1 = \frac{K}{R^2} \sin(wt+\emptyset) \tag{20}$$

Where $\emptyset$ is the phase shift introduced by phase shifter 570 and:

$$F_2 = \frac{K}{(R+L)^2} \sin wt \tag{21}$$

Solving for the phase of $F_1 + F_2$ gives:

$$\text{Phase } (F_1+F_2) = \tan^{-1} \left[ \frac{\sin \emptyset}{\frac{R^2}{(R+L)^2} + \cos \emptyset} \right] \tag{22}$$

and as can be seen, the resultant phase varies in a non-linear fashion. The form of equation (22) differs from the form of equation (8) due to the phase difference being applied to the rearmost emitter A26 in FIGURE 9 and the foremost detector 550 in FIGURE 10.

The output of phase detector 580 representative of the phase given by equation (22) is presented by a connection shown as arrow 582 to a microprocessor shown as box 584 having an output shown as arrow 590. As explained in connection with FIGURE 1, the microprocessor 584 can operate to linearize the otherwise non-linear signal so that the output on line 590 will be a function of the distance R in the same manner as it was in connection with FIGURE 1.

The output from the summing circuit 574 can, if desired, be used as an automatic gain control signal shown by an arrow 592 to control the drive circuitry 530 and thus control the intensity of the output from LED 512 to increase it when it is too dim or to decrease it when it is too bright. Since only one LED is used, this is possible where that was not the case in connection with FIGURE 1. When G is used to express the relative gain, then equation (20) above becomes:

$$\text{Phase } (F_1 + F_2) = \tan^{-1}\left[\frac{\text{Sin } \emptyset}{\frac{GR^2}{(R+L)^2} + \text{Cos } \emptyset}\right] \quad (23)$$

One advantage in using FIGURE 10 over that of FIGURE 1 is that it has been found that the output of the LEDs in FIGURE 1 have to be very constant in order for the system to work accurately. This may be difficult since LEDs are known to be very temperature sensitive and they may not individuall track well with changes in temperature for different LEDs. In the present case, however, with only one LED there is no problem with the difference between the LEDs and the illumination from LED 512 can change with temperature without affecting the accuracy of the system. It should be realized that the embodiment shown in FIGURE 10 can also be utilized in connection with the embodiment shown in FIGURES 4, 6, 7, and 9 just as readily as was the case in connection with FIGURE 1.

It is thus seen that I have provided a device for determining the distance to a surface which is both economical, uncomplicated, inexpensive, and accurate. Many obvious modifications will occur to those skilled in the art. As for example, the various phase angles used may be altered from those shown in the present invention, different sources of energy than LEDs and infrared wavelengths may be utilized and other ways of detecting phase or measuring the ratio of $F_1$ and $F_2$ may be employed. If, for example, the energy sources 12 and 18 were modulated at different frequencies, then frequency responsive apparatus could be employed to separate the two fluxes and take their ratio. It should also be understood that the use of microprocessors is arbitrary and depends on the use involved. I therefore intend not to be limited by the specific structures used to explain the preferred embodiments but rather intend to be limited only by the following claims.

Claims:

1. Proximity sensing apparatus for use with a remote surface (350), c h a r a c t e r i z e d   b y :
   first energy producing means (310, C) for projecting energy of a first phase to at least a first portion of the surface;
   second energy producing means (320, A) for projecting energy of a second phase to at least the first portion of the surface, the second energy producing means positioned a predetermined distance (L) more remote from the surface than the first energy producing means;
   energy responsive means (330, B) for receiving energy reflected from at least a portion of the first portion of the surface to produce a signal representative of the intensity of the energy of the first and second phase received thereby; and
   energy processing means (94) connected to receive the signal and to produce therefrom an output which varies with the ratio of the energy of the first and second phases as an indication of the proximity of the remote surface.

2. Apparatus according to claim 1, c h a r a c t e r - i z e d   i n   t h a t   the first energy producing means includes a first fiber optic element (C), the second energy producing means includes a second fiber optic element (A) and the energy responsive means includes a third fiber optic element.

3. Apparatus according to claim 2, c h a r a c t e r - i z e d   i n   t h a t   the first, second, and third fiber optic elements (C, A, B) are arranged concentrically.

4. Apparatus according to claim 2, c h a r a c t e r - i z e d   i n   t h a t the third fiber optic element (B) has a lower numerical aperature than the first and second fiber optic elements (C, A).

5. Apparatus according to claim 1, c h a r a c t e r - i z e d   i n   t h a t   the first phase is opposite the second phase and the resultant signal is of the first phase when the remote surface (350) is closer than a predetermined distance and is of the second phase when the remote surface is nearer than the predetermined distance.

6. Apparatus according to claim 5, c h a r a c t e r - i z e d   i n   t h a t   means (498) are provided for presenting a small signal to the energy responsive means to provide a signal of the first phase when no reflected energy is received from the remote surface.

7. Apparatus for determining the distance to a remote surface (510) comprising:
radiation transmitting means (512) for illuminating a portion of the surface (510) with radiation of a first frequency;
first detector means (550) mounted a first distance (R) from the remote surface (510) receiving radiation from the portion to produce a first output of the first frequency and of magnitude which varies with the first distance;
second detector means (540) mounted a second distance (R+L) from the surface different than the first distance (R) by a predetermined amount (L) to provide a second output of the first frequency and of magnitude which varies with the second distance;
phase shift means (570) connected to the first detector means (550) to shift the phase of the first output by a predetermined amount; and
signal processing means (574, 580, 584) connected to receive the phase shifted first input and the second output and to produce a resultant output which varies with the ratio therebetween as an indication of the distance to the remote surface.

8. Apparatus according to claim 7, c h a r a c t e r - i z e d   i n   t h a t   the signal processing means includes summing means (574) to produce a summed output of the phase shifted first signal and the second signal, a phase detector (580) to receive the second signal to produce the resultant output, and microprocessing means (584) connected to receive the resultant output to produce a linearized output.

9. Apparatus according to claim 7, c h a r a c t e r - i z e d   b y   gain control means (574, 592, 530) connected to control the amount of radiation transmitted by the  radiation transmitter means (512).

10. Apparatus responsive to the distance to a remote object, c h a r a c t e r i z e d   b y :
radiation means (400) having a first part (426, 444) for transmitting radiation to at least a portion of a remote object (434) and a second part (480) for receiving radiation reflected from the portion, the second part producing an output which varies with the radiation received, one of the first and second parts having first and second subparts with the first subpart arranged a predetermined distance (L) closer to the object than the second subpart, the first and second subparts causing the output to contain first and second components, the first component varying with the distance (R) to the object and the second component varying with the sum of the distance (R) to the object and the predetermined distance (L); and means (488, 494) connected to receive the output and to produce a resulting signal which varies with the ratio of the first and second components.

1/3

0252209

Fig. 1

Fig. 2

Fig. 3

Fig. 4

Fig. 5

Fig. 6

3/3

0252209
6011552

*Fig. 7*

*Fig. 8*

*Fig. 9*

*Fig. 10*